# EUROPEAN PATENT SPECIFICATION

(11) **EP 2 503 668 B1**
(45) Date of publication and mention of the grant of the patent: **13.05.2020**
(21) Application number: 11159554.2
(22) Date of filing: 24.03.2011
(51) Int. Cl.: H02J 13/00, G01R 19/25, G01R 21/06

(54) **Merging unit and method of operating a merging unit**
Zusammenführungseinheit und Verfahren zum Bedienen einer Zusammenführungseinheit
Unité de fusion et procédé de fonctionnement d'une unité de fusion

(43) Date of publication of application: 26.09.2012
(73) Proprietor: Schneider Electric GmbH, 40880 Ratingen (DE); ALSTOM Technology Ltd, 5400 Baden (CH)
(72) Inventor: Rudolph, Thomas, 61191 Rosbach v.d.H. (DE)
(74) Representative: Manitz Finsterwald Patent- und Rechtsanwaltspartnerschaft mbB

(56) References cited:
- EP-A1- 1 898 509
- EP-A1- 2 159 893
- KR-A- 20080 094 489
- US-A1- 2007 114 987
- US-A1- 2009 327 787
- US-A1- 2010 153 036
- APOSTOLOV A ET AL: "IEC 61850 process bus - principles, applications and benefits", PROTECTIVE RELAY ENGINEERS, 2010 63RD ANNUAL CONFERENCE FOR, IEEE, PISCATAWAY, NJ, USA, 29 March 2010 (2010-03-29), pages 1-6, XP031679128, ISBN: 978-1-4244-6073-1
- BRAND K-P ED - ZOBAA A: "The standard IEC 61850 as prerequisite for intelligent applications in substations", POWER ENGINEERING SOCIETY GENERAL MEETING, 2004. IEEE, IEEE, PISCATAWAY, NJ, USA, 6 June 2004 (2004-06-06), pages 714-718, XP010756486, DOI: 10.1109/PES.2004.1372909 ISBN: 978-0-7803-8465-1

## Description

### Field of the invention

The present invention relates to a merging unit, particularly for substation automation.
The present invention further relates to a method of operating a merging unit.

### Background

Merging units are e.g. used in substation automation systems for collecting and forwarding sensor data to further devices such as intelligent electronic devices (IEDs) provided for protection and/or control purposes on a higher level of said substation automation system.

US 2010/0153036 A1 discloses an intelligent electronic device (IED) integrating a power metering unit (PMU) for calculating power quality information and a merging unit receiving current and voltage samples which are provided with time stamps and formatted in the Sampled Measured Values (SMV) format defined by the IEC 61850-9, wherein the sampled measured values are transmitted to further devices using the publish-subscribe messaging protocol defined by the IEC 61850-9.

In Apostolov et al: "IEC 61850 process bus - principles, applications and benefits" (XP031679128, pages 1-6) an overview over the IEC 61850 protocol is given. Brand et al: "The standard IEC 61850 as prerequisite for intelligent applications in substations" (XP010756486, pages 714-718) describes the interaction of IEDs and merging units. EP 2 159 893 A1 teaches a system using IEDs for substation automation with redundant protection. EP 1 898 509 A1 discloses an IED equipped with a timing input signal according to the IRIG-B standard.

It is an object of the present invention to provide an improved merging unit and an improved method of operating a merging unit that provide an increased operational flexibility and enable a reduced complexity for higher level architectures of a substation automation system and as a basis for a better power quality monitoring of an electrical distribution grid.

### Summary

Regarding the abovementioned merging unit, this object is achieved by a merging unit according to claim 1. The merging unit comprises at least one input interface for receiving input data characterizing voltage and/or current measurements related to a component of a power system, wherein said merging unit further comprises a control unit that is configured to determine power quality information depending on said input data.

The determination of power quality information within the inventive merging unit advantageously enables to provide a simplified substation automation system architecture.

According to a preferred embodiment, said merging unit is configured to transform said received input data into a predetermined output format, whereby transformed input data is obtained, and to output said transformed input data to a further device. Thus, input data collected by the merging unit can locally be processed within the merging unit and can be forwarded to external devices such as IEDs of the substation automation system in the desired data format. Alternatively or additionally, the power quality information, which is determined by the control unit of the merging unit according to the embodiments, can also be transformed to a predetermined data format which e.g. facilitates evaluation of said power quality information by other devices.

According to a further preferred embodiment, said merging unit is configured to output said power quality information to a further device.

According to the invention, said merging unit is configured to assign timestamp information to said power quality information and, preferably, to said input data and/or said transformed input data, which enables a particularly precise assessment of the data collected by the merging unit. Especially, further devices which are supplied with the respective data by the merging unit according to the embodiments, such as e.g. protection and/or control IEDs, can process the respective data with a correct time reference, which is particularly advantageous if said data is delivered to the protection and/or control IEDs by various merging units that are geographically distributed.

According to the invention, said merging unit is configured to implement logical nodes according to the International Electrotechnical Commission, IEC, 61850-7 standard, wherein said logical nodes comprise at least one of: QFVR, QITR, QIUB, QVTR, QVUB. Thus, the merging unit according to the embodiments can advantageously make use of underlying data model as specified by the IEC 61850 standard.

According to the invention, said merging unit is configured to map information to and/or from said the logical nodes to at least one of the following communication protocols: IEC 61850-8-1 (Mapping to MMS), IEC 61850-8-1 Generic Object Oriented Substation Event (GOOSE), IEC 61850-9-2 Sampled Measured values (SMV), whereby a particularly efficient communications process between the logical node(s) as implemented in the merging unit according to the embodiments and external devices such as e.g. protection and/or control IEDs is attained.

According to a further preferred embodiment, said merging unit is configured to map communications according to IEC 61850-8-1 to a, preferably dedicated, first physical communications port, and to map communications according to IEC 61850-9-2 to a, preferably dedicated, second physical communications port. Alternatively, the first physical communications port, which is proposed to support IEC 61850-8-1 communications, may also be employed for IEC 61850-9-2 communications.

A further solution to the object of the present invention is given by a method of operating a merging unit according to claim 6. Further advantageous embodiments are subject of the dependent claims.

### Brief description of the Figures

Further aspects, features and embodiments of the present invention are given in the following detailed description with reference to the drawings, in which:
- Fig. 1: depicts a schematic block diagram of an embodiment of the inventive merging unit,
- Fig. 2: depicts a detailed functional block diagram of an embodiment of the inventive merging unit, and
- Fig. 3: depicts a schematic block diagram of a third embodiment of the inventive merging unit.

### Detailed Description

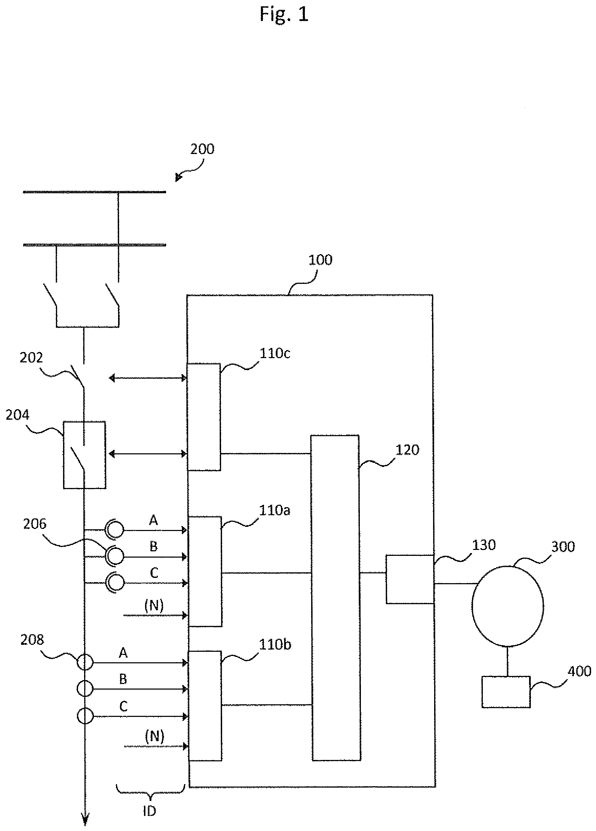

Fig. 1 depicts a schematic block diagram of a first embodiment of an inventive merging unit 100, which is assigned to a power system 200 for processing sensor data characterizing voltage and/or current measurements related to components of said power system 200.

Said power system 200 exemplarily comprises switchgear like disconnectors 202 and circuit breakers 204. Further, the power system 200 comprises one or more voltage transformers 206 and one or more current transformers 208 for transforming the voltages and/or currents of the power system 200 in a per se known manner, i.e. to reduced value ranges, to facilitate measurement and analysis of these parameters.

For example, the voltage transformers 206 may comprise conventional voltage transformers and/or non-conventional voltage transformers. Likewise, the current transformers 208 may comprise conventional current transformers and/or non-conventional current transformers such as e.g. non-contact current transformers (NCCT) of the Rogowski coil or fibre-optic type.

For receiving output signals of the voltage transformers 206 and the current transformers 208, which are further referred to as "input data" ID to the merging unit 100, the merging unit 100 comprises respective input interfaces.

According to the present embodiment, the merging unit 100 comprises a first input interface 110a, which is configured to receive the output signals of the voltage transformers 206 as input data ID. The merging unit 100 also comprises a second input interface 110b, which is configured to receive the output signals of the current transformers 208 as input data ID.

Depending on the specific configuration of the voltage transformers 206 and the current transformers 208, the first input interfaces 110a, 110b comprise respectively configured input ports. For example, if the voltage transformers 206 are of the conventional type delivering an output voltage within e.g. a 0 V to 100 V range depending on a primary voltage of a component 204 of the power system 200 to which the voltage transformers 206 are connected, the first input interface 110a is capable of processing said respective input data within the specified voltage range. The same applies to the specific configuration of the second input interface 110b which is connected to the current transformers. I.e., for operating conventional current transformers, the second input interface 110b may e.g. be configured to receive a current signal within the 0 A to 5 A range.

Optionally, the merging unit 100 may also comprise at least one further input interface 110c, which is configured to receive input data in binary form such as e.g. from position indicators or other components of the power system 200 providing binary output data.

For processing the received input data ID, the merging unit 100 comprises a control unit 120, which may e.g. comprise a microprocessor and/or a digital signal processor (DSP) or any other type of calculating means that are capable of performing the required steps of processing.

After processing the input data ID, the merging unit 100 may forward processed input data to an external device. According to the embodiment of Fig. 1, the merging unit 100 comprises a data interface 130 which e.g. serves to establish a data connection with a network 300 and/or further devices 400, e.g. via said network 300.

For instance, the data interface 130 could comprise an Ethernet-type interface, which may provide data connections between the merging unit 100 and other Ethernet based devices as protection relays, bay computers, substation level devices like Gateways, substation computer or Human-Machine Interfaces (HMI) identified as substation Automation System (SAS), which may e.g. use IEC 61850-9-2 and IEC 61850-8-1 protocol as a option.

Generally, according to a preferred embodiment, the merging unit 100 is configured to perform measurements, preferably real-time measurements, of the input data ID as provided by the instrument transformers 206, 208, and to forward said measurements to further external components 400. As will be explained in detail below, the measurements related to the input data ID may inter alia comprise a transformation of those portions of input data received in the analog domain to the digital domain.

Presently, substation automation systems, which are used to control power systems 200 as exemplarily depicted by Fig. 1, are based on a functional distribution which is mainly structured into 3 levels: process Level, bay level and substation level. In this context, the merging unit 100 may typically represent a device of the substation level, and the device 400 may represent an intelligent electronic device (IED) in the sense of the IEC 61850 standard which is provided at the bay level, e.g. a protection or control IED.

According to the present invention, apart from performing said measurements, preferably real-time measurements, of the input data ID as provided by the instrument transformers 206, 208, and to forward said measurements to further external components such as bay level IEDs 400, the merging unit 100, or its control unit 120, respectively, is further configured to determine power quality information depending on said input data ID or the associated measurements obtained via the input interfaces 110a, 110b.

Thus, in addition to forwarding voltage and/or current measurements to external devices 400, the inventive merging unit 100 advantageously enables to locally determine a power quality associated with the input data ID that reflects voltages and/or currents of the power system 200 the merging unit 100 is associated with. The power quality information so obtained may also be forwarded to further devices 400.

By integrating the above explained functionality directed to determining power quality, substation automation systems may be provided which comprise less IEDs, particularly on the bay level. Apart from saving costs by reducing the number of elements of the substation automation systems, higher accuracy regarding the power quality information may also be attained since the power quality information is determined at the same stage, i.e. the merging unit 100, where the basic input data ID for deriving said power quality information is obtained.

Moreover, less documentation is required for substation automation systems that are equipped with the inventive merging units 100 since a higher degree of functional integration is provided.

Still further, the forwarding of power quality information obtained according to the present invention may seamlessly be integrated with existing data exchange techniques such as e.g. according to the IEC 61850 standard.

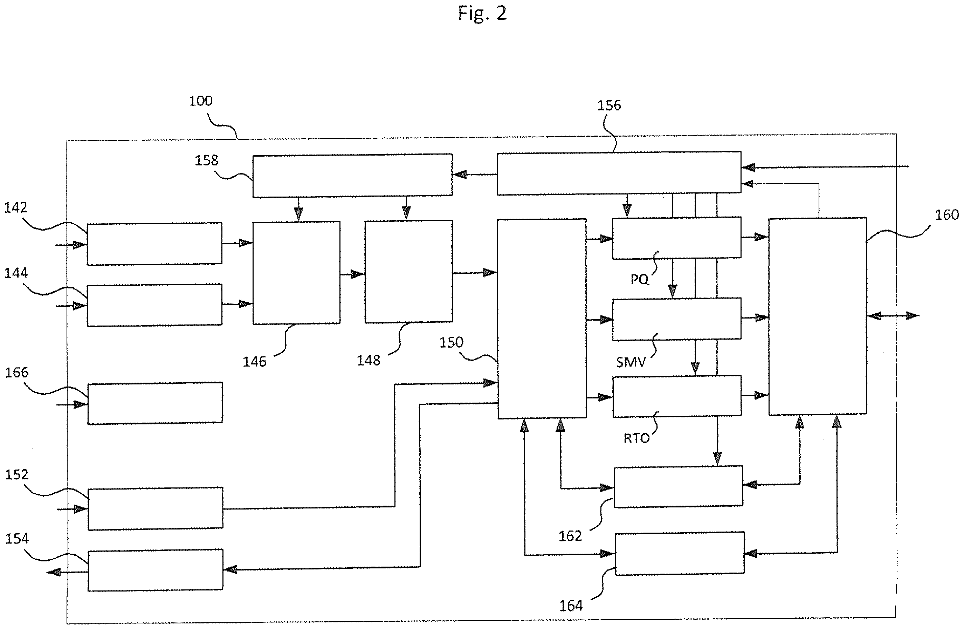

Fig. 2 depicts a detailed functional block diagram of an embodiment of the inventive merging unit 100.

As depicted by Fig. 2, the merging unit 100 comprises input conditioning means 142 for conditioning the output signals of the voltage transformers 206 (Fig. 1) as received at the first input interface 110a of the merging unit 100. Likewise, the merging unit 100 comprises input conditioning means 144 for conditioning the output signals of the current transformers 206 (Fig. 1) as received at the second input interface 110b of the merging unit 100.

Depending on a specific measurement scheme employed by the merging unit 100, the input conditioning means 142, 144 may be configured to provide standardized analog signals to a subsequent signal processing stage 146 that is configured to apply steps of filtering and sample and hold to the supplied signals. Optionally, internal signal paths or components of the processing stage 146 may be multiplexed in a per se known manner.

The processing stage 146 forwards respective output data to the analog to digital (A/D) converter means 148 which transform the analog output signals provided by the processing stage 146 to the digital domain. Thus, digital data representing the input data ID (Fig. 1), which relates to voltage and/or current values associated with the power system 200 may be forwarded to the digital signal processing means 150.

The merging unit 100 also comprises input conditioning means 152 for binary input data ID, such as received via the further input interface 110c (Fig. 1), which are configured to forward respectively conditioned binary input data to the digital signal processing means 150.

Optionally, output relay interface means 154 may also be provided at the merging unit 100 in order to enable external devices to be controlled like auxiliary relays, circuit breakers, disconnectors or any other equipment.

In order to enable time synchronization of the input data ID or the respective measurement values (e.g., digital samples as obtained by the ADC 148), time synchronization means 156 are provided. Said time synchronization means may provide an integrated clock and/or corresponding counter modules (not shown). Moreover, the time synchronization means 156 comprise an interface to an external synchronisation network, which operates according to the Inter Range Instrumentation Group, IRIG, -B and/or the 1PPS standards, and/or to Institute of Electrical and Electronics Engineers, IEEE, 1588.

A sample and conversion control 158 is supplied with respective timing information from the time synchronization means 156, whereby the steps of filtering, multiplexing, sample and hold and ADC within the components 146, 148 may performed with a precise time reference.

According to the present invention, the digital signal processing means 150 are configured to determine power quality information PQ depending on said input data ID (Fig. 1) obtained from the respective input interfaces 110a, 110b. The power quality information PQ, too, is associated with timing information supplied by the time synchronization means 156.

Additionally, the digital signal processing means 150 are configured to determine sample measured values SMV depending on said input data ID (Fig. 1) obtained from the respective input interfaces 110a, 110b. The sample measured values SMV may advantageously also be associated with timing information supplied by the time synchronization means 156.

Optionally, the digital signal processing means 150 may also be configured to determine further real-time operating measurements RTO, preferably also at least partially depending on said input data ID (Fig. 1) obtained from the respective input interfaces 110a, 110b. The further real-time operating measurements RTO may advantageously also be associated with timing information supplied by the time synchronization means 156.

As already mentioned before, the sampling of input data ID (Fig. 1) is controlled by the sample and conversion control 158 which is controlling as well the A/D converter 148. Since the sampled measured values SMV - as well as power quality information PQ - requires a precise time synchronisation, the time synchronisation means 156 provide respective synch signals for the sample and conversion control 158 as well as for the time stamps of PQ, SMV, RTO, and optionally also for real-time digital information 162.

The digital signal processing means 150 preferably convert all signals into the related format and manage the binary I/O of the merging unit 100, cf. the blocks 152, 154 as well.

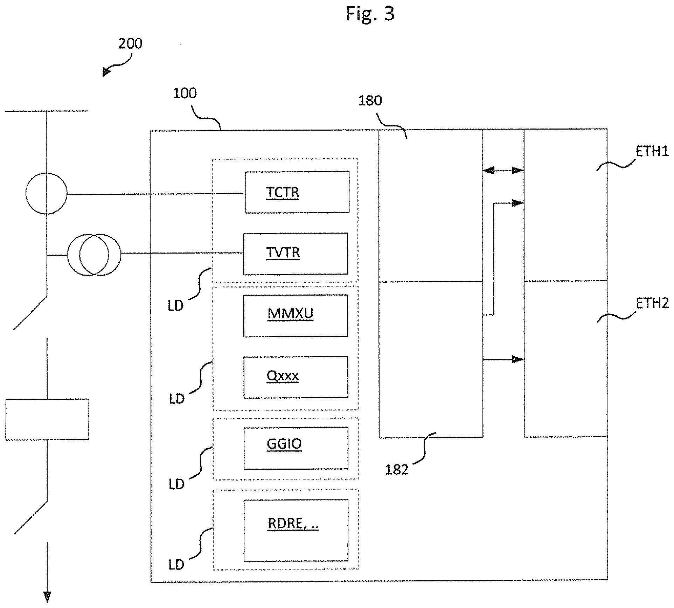

For exchange with further devices 400 (Fig. 1), all data to be exchanged are mapped by communications mapping means 160 to a predetermined related communication protocol, a variant of which will be explained below with reference to Fig. 3.

Furthermore, a configuration, setting and test block 164 may be provided which is using well-known protocols such as e.g. FTP (file transfer protocol) and HTTP (hyper text transfer protocol) for remote and local access to the merging unit 100. The implementation of the power supply 166 is depending on the application.

According to a preferred embodiment, one or more of the functional blocks of the merging unit 100 explained above with reference to Fig. 2 may advantageously be integrated to the control unit 120 (Fig. 1).

Fig. 3 depicts an internal structure of an inventive merging unit 100 according to an embodiment from the communication point of view based on IEC 61850. Following the IEC 61850 hierarchical concept of communication modelling, the physical device (PD) in the context of IEC 61850 is equivalent to the merging unit 100. The PD 100 contains one or more logical devices LD, cf. the dashed rectangles, which are used to group Logical Nodes LN (e.g. TCTR, TVTR, ..) which belong together like LNs TCTR, TVTR for transformers, and the like. Basically, according to a preferred embodiment, the merging unit 100 may provide the following LNs: TCTR, TVTR, MMXU, QFVR, QITR, QIUB, QVTR, QVUB, QVIR, GGIO.

Further optional LNs are application depending: XCBR, XSWI, RDRE, CSWI, RSYN,... and may also be implemented by the inventive merging unit 100. Their use, however, is subject to setting of additional Application Functional Blocks (AFBs) .

According to a particularly preferred embodiment, the information originating from and/or to be supplied to the LNs are mapped to one of the following protocols according to the type of information: Status information, commands, settings and derived measurements are mapped to MMS reports based on IEC 61850-8-1, cf. the protocol block 180. In addition, derived measurements and binary information could e.g. be mapped to IEC 61850-8-1 GOOSE (Generic Object Oriented Substation Event) depending on the application, also cf. the protocol block 180. Sampled Measured Values are mapped to IEC 61850-9-2 SMV by means of the further protocol block 182.

The specific mapping of the communications supported by the protocol blocks 180, 182 to physical interfaces is subject of setting. According to an embodiment, the IEC 61850-8-1 protocol block 180 is mapped to a dedicated Ethernet port ETH1. This port ETH1 may also be shared together with the IEC 61850-9-2 protocol block 182. Further, the IEC 61850-9-2 protocol block 182 may be mapped to a dedicated further Ethernet port ETH2. The physical implementation of the interfaces ETH1 and ETH2 and the related network topology is not subject of the present invention. The implementation could e.g. be wired (CAT5 or the like) or fibre optic, single or redundant port, in accordance with IEC 61850-90-4 or could comprise further communications channels capable of supporting the disclosed protocols. The same applies to the data rate of the interfaces ETH1, ETH2.

According to a preferred embodiment, one or more of the communications- and protocol-related blocks of the merging unit 100 explained above with reference to Fig. 3 may advantageously be implemented by the control unit 120 (Fig. 1) or its digital signal processing means.

The merging unit 100 according to the embodiments is going far beyond the conventional systems and implementations of power quality assessment in dedicated IEDs or as a function in protection relays. Due to the emerging use of merging units 100, the invention is advantageously incorporating PQ data generation and/or analysis into the merging unit 100 and communicating conventional SMV as well as power quality data PQ via the same or different communications ports ETH1, ETH2 to the upper level of a substation automation system comprising said merging unit 100. This advantageously ensures that the measurement of input data ID and the determination of power quality information PQ can be done with the highest possible accuracy and less additional HW such as conventional dedicated IEDs for assessing power quality. The merging unit 100 according to the embodiments can advantageously use existing communications infrastructure and is open for future standardisation on communication protocol level.

## Claims

1. Merging unit (100), particularly for substation automation, comprising at least one input interface (110a, 110b) for receiving input data (ID) characterizing at least one voltage and/or current related to a component of a power system (200), wherein said merging unit (100) comprises timing synchronization means (156) which comprise an interface to an external synchronization network operating according to one of the Inter Range Instrumentation Group, IRIG, -B standard, the 1PPS standard and the Institute of Electrical and Electronics Engineers, IEEE, 1588 standard, wherein the merging unit (100) is configured to implement logical nodes according to the International Electrotechnical Commission, IEC, 61850-7 standard, wherein the logical nodes comprise at least one of TCTR and TVTR, wherein the merging unit (100) is configured to determine sampled measured values, SMV, depending on said input data (ID) and to map information from at least one of the logical nodes to the IEC 61850-9-2 sampled measured values, SMV, communication protocol, and
wherein:
- said merging unit (100) comprises a control unit (120) that is configured to determine power quality information (PQ) depending on said input data (ID),
- the merging unit (100) is configured to associate the power quality information (PQ) with timing information supplied by the timing synchronization means (156),
- the logical nodes comprise at least one of QFVR, QITR, QIUB, QVTR and QVUB, and
- the merging unit (100) is configured to map information to and/or from at least one of the logical nodes to the IEC 61850-8-1, Mapping to MMS, communication protocol or to the IEC 61850-8-1, Generic Object Oriented Substation Event, GOOSE, communication protocol.

2. Merging unit (100) according to claim 1, wherein said merging unit (100) is configured to transform said received input data (ID) into a predetermined output format, whereby transformed input data is obtained, and to output said transformed input data to a further device (400).

3. Merging unit (100) according to one of the preceding claims, wherein said merging unit (100) is configured to output said power quality information (PQ) to a further device (400).

4. Merging unit (100) according to one of the preceding claims, wherein said merging unit (100) is configured to assign timestamp information to said power quality information (PQ) and/or said input data (ID) and/or said transformed input data.

5. Merging unit (100) according to one of the preceding claims, wherein said merging unit (100) is configured to map communications according to IEC 61850-8-1 to a, preferably dedicated, first physical communications port (ETH1), and to map communications according to IEC 61850-9-2 to a, preferably dedicated, second physical communications port (ETH2).

6. Method of operating a merging unit (100), particularly for substation automation, wherein said merging unit (100) comprises at least one input interface (110a, 110b) for receiving input data (ID) characterizing at least one voltage and/or current related to a component of a power system (200), wherein said merging unit (100) comprises timing synchronization means (156) which comprise an interface to an external synchronization network operating according to one of the Inter Range Instrumentation Group, IRIG, -B standard, the 1PPS standard and the Institute of Electrical and Electronics Engineers, IEEE, 1588 standard, wherein the merging unit (100) implements logical nodes according to the International Electrotechnical Commission, IEC, 61850-7 standard, wherein the logical nodes comprise at least one of TCTR and TVTR, wherein the merging unit (100) determines sampled measured values, SMV, depending on the input data (ID), wherein the merging unit (100) maps information to and/or from at least one of the logical nodes to the IEC 61850-9-2 sampled measured values, SMV, communication protocol, and wherein:
- said merging unit (100) determines, using a control unit (120), power quality information (PQ) depending on said input data (ID),
- the merging unit (100) associates the power quality information (PQ) with timing information supplied by the timing synchronization means (156),
- the logical nodes comprise at least one of QFVR, QITR, QIUB, QVTR and QVUB, and
- the merging unit (100) maps information to and/or from at least one of the logical nodes to the IEC 61850-8-1, Mapping to MMS, communication protocol or to the IEC 61850-8-1, Generic Object Oriented Substation Event, GOOSE, communication protocol.

7. Method according to claim 6, wherein said merging unit (100) transforms said received input data (ID) into a predetermined output format, whereby transformed input data is obtained, and outputs said transformed input data to a further device (400).

8. Method according to one of the claims 6 to 7, wherein said merging unit (100) outputs said power quality information (PQ) to a further device (400).

9. Method according to one of the claims 6 to 8, wherein said merging unit (100) assigns timestamp information to said power quality information (PQ) and/or said input data (ID) and/or said transformed input data.

10. Method according to one of the claims 6 to 9, wherein said merging unit (100) maps communications according to IEC 61850-8-1 to a, preferably dedicated, first physical communications port (ETH1), and maps communications according to IEC 61850-9-2 to a, preferably dedicated, second physical communications port (ETH2).

## Patentansprüche

1. Zusammenführungseinheit (100), insbesondere für die Automatisierung von Unterstationen, mit mindestens einer Eingabeschnittstelle (110a, 110b) zum Empfangen von Eingabedaten (ID), die mindestens eine Spannung und/oder einen Strom kennzeichnen, die/der mit einer Komponente eines Leistungssystems (200) in Beziehung steht/stehen, wobei die Zusammenführungseinheit (100) ein Zeitsynchronisationsmittel (156) umfasst, das eine Schnittstelle zu einem externen Synchronisationsnetz umfasst, das gemäß einem von dem Standard -B der Inter Range Instrumentation Group, IRIG, dem Standard 1PPS und dem Standard IEEE 1588 des Instituts für Elektro- und Elektronikingenieure arbeitet, wobei die Zusammenführungseinheit (100) konfiguriert ist, um logische Knoten gemäß dem Standard IEC 61850-7 der Internationalen Elektrotechnischen Kommission zu implementieren, wobei die logischen Knoten mindestens eines von TCTR und TVTR umfassen, wobei die Zusammenführungseinheit (100) konfiguriert ist, um abgetastete Messwerte, SMV, in Abhängigkeit von den Eingabedaten (ID) zu bestimmen, und um Informationen von mindestens einem der logischen Knoten auf das Kommunikationsprotokoll IEC 61850-9-2 abgetastete Messwerte, SMV, abzubilden, und
wobei:
- die Zusammenführungseinheit (100) eine Steuereinheit (120) umfasst, die konfiguriert ist, um in Abhängigkeit von den Eingabedaten (ID) Informationen zur Leistungsqualität (PQ) zu bestimmen,
- die Zusammenführungseinheit (100) konfiguriert ist, um die Informationen zur Leistungsqualität (PQ) mit von dem Zeitsynchronisationsmittel (156) gelieferten Zeitinformationen zu verknüpfen,
- die logischen Knoten mindestens eines von QFVR, QITR, QIUB, QVTR und QVUB umfassen, und
- die Zusammenführungseinheit (100) konfiguriert ist, um Informationen auf mindestens einen und/oder von mindestens einem der logischen Knoten auf das Kommunikationsprotokoll IEC 61850-8-1, Mapping to MMS, oder auf das Kommunikationsprotokoll IEC 61850-8-1, Generic Object Oriented Substation Event, GOOSE, abzubilden.

2. Zusammenführungseinheit (100) nach Anspruch 1, wobei die Zusammenführungseinheit (100) konfiguriert ist, um die empfangenen Eingabedaten (ID) in ein vorbestimmtes Ausgabeformat zu transformieren, wodurch transformierte Eingabedaten erhalten werden, und um die transformierten Eingabedaten an eine weitere Vorrichtung (400) auszugeben.

3. Zusammenführungseinheit (100) nach einem der vorstehenden Ansprüche, wobei die Zusammenführungseinheit (100) konfiguriert ist, um die Informationen zur Leistungsqualität (PQ) an eine weitere Vorrichtung (400) auszugeben.

4. Zusammenführungseinheit (100) nach einem der vorstehenden Ansprüche, wobei die Zusammenführungseinheit (100) konfiguriert ist, um den Informationen zur Leistungsqualität (PQ) und/oder den Eingabedaten (ID) und/oder den transformierten Eingabedaten Zeitstempelinformationen zuzuordnen.

5. Zusammenführungseinheit (100) nach einem der vorstehenden Ansprüche, wobei die Zusammenführungseinheit (100) konfiguriert ist, um Kommunikationen gemäß IEC 61850-8-1 auf einen, vorzugsweise dedizierten, ersten physikalischen Kommunikationskanal (ETH1) abzubilden, und um Kommunikationen gemäß IEC 61850-9-2 auf einen, vorzugsweise dedizierten, zweiten physikalischen Kommunikationskanal (ETH2) abzubilden.

6. Verfahren zum Betreiben einer Zusammenführungseinheit (100), insbesondere für die Automatisierung von Unterstationen, wobei die Zusammenführungseinheit (100) mindestens eine Eingabeschnittstelle (110a, 110b) zum Empfangen von Eingabedaten (ID) aufweist, die mindestens eine Spannung und/oder einen Strom kennzeichnen, die/der mit einer Komponente eines Leistungssystems (200) in Beziehung steht/stehen, wobei die Zusammenführungseinheit (100) ein Zeitsynchronisationsmittel (156) umfasst, das eine Schnittstelle zu einem externen Synchronisationsnetz aufweist, das gemäß einem von dem Standard -B der Inter Range Instrumentation Group, IRIG, dem Standard 1PPS und dem Standard IEEE 1588 des Instituts für Elektro- und Elektronikingenieure arbeitet, wobei die Zusammenführungseinheit (100) logische Knoten gemäß dem Standard IEC 61850-7 der Internationalen Elektrotechnischen Kommission implementiert, wobei die logischen Knoten mindestens eines von TCTR und TVTR umfassen, wobei die Zusammenführungseinheit (100) abgetastete Messwerte, SMV, in Abhängigkeit von den Eingabedaten (ID) bestimmt, wobei die Zusammenführungseinheit (100) Informationen auf mindestens einen und/oder von mindestens einem der logischen Knoten auf das Kommunikationsprotokoll IEC 61850-9-2 abgetastete Messwerte, SMV, abbildet, und wobei:
- die Zusammenführungseinheit (100) mit Hilfe einer Steuereinheit (120) Informationen zur Leistungsqualität (PQ) in Abhängigkeit von den Eingabedaten (ID) bestimmt,
- die Zusammenführungseinheit (100) die Informationen zur Leistungsqualität (PQ) mit von dem Zeitsynchronisationsmittel (156) gelieferten Zeitinformationen verknüpft,
- die logischen Knoten mindestens eines von QFVR, QITR, QIUB, QVTR und QVUB umfassen, und
- die Zusammenführungseinheit (100) Informationen auf mindestens einen und/oder von mindestens einem der logischen Knoten auf das Kommunikationsprotokoll IEC 61850-8-1, Mapping to MMS, oder auf das Kommunikationsprotokoll IEC 61850-8-1, Generic Object Oriented Substation Event, GOOSE, abbildet.

7. Verfahren nach Anspruch 6, wobei die Zusammenführungseinheit (100) die empfangenen Eingabedaten (ID) in ein vorbestimmtes Ausgabeformat transformiert, wodurch transformierte Eingabedaten erhalten werden, und die transformierten Eingabedaten an eine weitere Vorrichtung (400) ausgibt.

8. Verfahren nach einem der Ansprüche 6 bis 7, wobei die Zusammenführungseinheit (100) die Informationen zur Leistungsqualität (PQ) an eine weitere Vorrichtung (400) ausgibt.

9. Verfahren nach einem der Ansprüche 6 bis 8, wobei die Zusammenführungseinheit (100) den Informationen zur Leistungsqualität (PQ) und/oder den Eingabedaten (ID) und/oder den transformierten Eingabedaten Zeitstempelinformationen zuordnet.

10. Verfahren nach einem der Ansprüche 6 bis 9, wobei die Zusammenführungseinheit (100) Kommunikationen gemäß IEC 61850-8-1 auf einen, vorzugsweise dedizierten, ersten physikalischen Kommunikationskanal (ETH1) abbildet und Kommunikationen gemäß IEC 61850-9-2 auf einen, vorzugsweise dedizierten, zweiten physikalischen Kommunikationskanal (ETH2) abbildet.

## Revendications

1. Unité de fusion (100), en particulier pour l'automatisation de postes électriques, comprenant au moins une interface d'entrée (110a, 110b) pour recevoir des données d'entrée (ID) caractérisant au moins une tension et/ou un courant liés à un composant d'un système électrique (200), dans laquelle ladite unité de fusion (100) comprend des moyens de synchronisation de temporisation (156) qui comprennent une interface vers un réseau de synchronisation externe fonctionnant selon une norme parmi la norme B de IRIG, Inter Range Instrumentation Group, la norme 1PPS et la norme 1588 de l'Institute of Electrical and Electronics Engineers, IEEE, dans laquelle l'unité de fusion (100) est configurée pour mettre en œuvre des nœuds logiques selon la norme 61850-7 de la Commission électrotechnique internationale, CEI, dans laquelle les nœuds logiques comprennent au moins l'un des nœuds logiques TCTR et TVTR, dans laquelle l'unité de fusion (100) est configurée pour déterminer des valeurs mesurées échantillonnées, SMV, en fonction desdites données d'entrée (ID) et pour mettre en correspondance des informations en provenance d'au moins l'un des nœuds logiques avec le protocole de communication de valeurs mesurées échantillonnées, SMV, de la CEI 61850-9-2, et dans laquelle :
- ladite unité de fusion (100) comprend une unité de commande (120) qui est configurée pour déterminer des informations de qualité d'énergie (PQ) en fonction desdites données d'entrée (ID),
- l'unité de fusion (100) est configurée pour associer les informations de qualité d'énergie (PQ) à des informations de temporisation fournies par les moyens de synchronisation de temporisation (156),
- les nœuds logiques comprennent au moins un nœud logique parmi QFVR, QITR, QIUB, QVTR et QVUB, et
- l'unité de fusion (100) est configurée pour mettre en correspondance des informations à destination et/ou en provenance d'au moins l'un des nœuds logiques avec le protocole de communication Correspondance avec MMS, de la norme CEI 61850-8-1 ou avec le protocole de communication GOOSE, Événement de poste orienté objet générique, de la norme CEI 61850-8-1.

2. Unité de fusion (100) selon la revendication 1, dans laquelle ladite unité de fusion (100) est configurée pour transformer lesdites données d'entrée (ID) reçues en un format de sortie prédéterminé, de sorte que des données d'entrée transformées sont obtenues, et pour délivrer lesdites données d'entrée transformées à un autre dispositif (400).

3. Unité de fusion (100) selon l'une des revendications précédentes, dans laquelle ladite unité de fusion (100) est configurée pour délivrer lesdites informations de qualité d'énergie (PQ) à un autre dispositif (400).

4. Unité de fusion (100) selon l'une des revendications précédentes, dans laquelle ladite unité de fusion (100) est configurée pour attribuer des informations d'horodatage auxdites informations de qualité d'énergie (PQ) et/ou auxdites données d'entrée (ID) et/ou auxdites données d'entrée transformées.

5. Unité de fusion (100) selon l'une des revendications précédentes, dans laquelle ladite unité de fusion (100) est configurée pour mettre en correspondance des communications selon la norme CEI 61850-8-1 avec un premier port de communication physique, de préférence dédié (ETH1), et pour mettre en correspondance des communications selon la norme CEI 61850-9-2 avec un second port de communication physique, de préférence dédié (ETH2).

6. Procédé de fonctionnement d'une unité de fusion (100), en particulier pour l'automatisation de postes électriques, dans lequel ladite unité de fusion (100) comprend au moins une interface d'entrée (110a, 110b) pour recevoir des données d'entrée (ID) caractérisant au moins une tension et/ou un courant liés à un composant d'un système électrique (200), dans lequel ladite unité de fusion (100) comprend des moyens de synchronisation de temporisation (156) qui comprennent une interface vers un réseau de synchronisation externe fonctionnant selon une norme parmi la norme B de IRIG, Inter Range Instrumentation Group, la norme 1PPS et la norme 1588 de l'Institute of Electrical and Electronics Engineers, IEEE, dans lequel l'unité de fusion (100) met en œuvre des nœuds logiques selon la norme 61850-7 de la Commission électrotechnique internationale, CEI, dans lequel les nœuds logiques comprennent au moins l'un des nœuds logiques TCTR et TVTR, dans lequel l'unité de fusion (100) détermine des valeurs mesurées échantillonnées, SMV, en fonction des données d'entrée (ID), dans lequel l'unité de fusion (100) met en correspondance des informations à destination et/ou en provenance d'au moins l'un des nœuds logiques avec le protocole de communication de valeurs mesurées échantillonnées, SMV, de la CEI 61850-9-2, et dans lequel :
- ladite unité de fusion (100) détermine, au moyen d'une unité de commande (120), des informations de qualité d'énergie (PQ) en fonction desdites données d'entrée (ID),
- l'unité de fusion (100) associe les informations de qualité d'énergie (PQ) à des informations de temporisation fournies par les moyens de synchronisation de temporisation (156),
- les nœuds logiques comprennent au moins un nœud logique parmi QFVR, QITR, QIUB, QVTR et QVUB, et
- l'unité de fusion (100) met en correspondance des informations à destination et/ou en provenance d'au moins l'un des nœuds logiques avec le protocole de communication Correspondance avec MMS, de la norme CEI 61850-8-1 ou avec le protocole de communication GOOSE, Événement de poste orienté objet générique, de la norme CEI 61850-8-1.

7. Procédé selon la revendication 6, dans lequel ladite unité de fusion (100) transforme lesdites données d'entrée (ID) reçues en un format de sortie prédéterminé, de sorte que des données d'entrée transformées sont obtenues, et délivre lesdites données d'entrée transformées à un autre dispositif (400).

8. Procédé selon l'une des revendications 6 à 7, dans lequel ladite unité de fusion (100) délivre lesdites informations de qualité d'énergie (PQ) à un autre dispositif (400).

9. Procédé selon l'une des revendications 6 à 8, dans lequel ladite unité de fusion (100) attribue des informations d'horodatage auxdites informations de qualité d'énergie (PQ) et/ou auxdites données d'entrée (ID) et/ou auxdites données d'entrée transformées.

10. Procédé selon l'une des revendications 6 à 9, dans lequel ladite unité de fusion (100) met en correspondance des communications selon la norme CEI 61850-8-1 avec un premier port de communication physique, de préférence dédié (ETH1), et met en correspondance des communications selon la norme CEI 61850-9-2 avec un second port de communication physique, de préférence dédié (ETH2).
